# EUROPEAN PATENT SPECIFICATION

(11) **EP 3 315 411 B1**
(45) Date of publication and mention of the grant of the patent: **06.01.2021**
(21) Application number: 17199212.6
(22) Date of filing: 30.10.2017
(51) Int. Cl.: B64D 37/32, B64D 37/34, A62C 3/08

(54) **FUEL STABILIZATION CHAMBER**
KRAFTSTOFFSTABILISIERUNGSKAMMER
CHAMBRE DE STABILISATION DE CARBURANT

(30) Priority: 31.10.2016 US 201662414855 P
(43) Date of publication of application: 02.05.2018
(73) Proprietor: Hamilton Sundstrand Corporation, Charlotte, NC 28217 (US)
(72) Inventor: RHEAUME, Jonathan, West Hartford, CT 06119 (US); CORDATOS, Haralambos, Colchesster, CT 06415 (US)
(74) Representative: Dehns

(56) References cited:
- US-A- 3 732 668
- US-A1- 2006 113 248
- US-A1- 2010 006 048
- US-A1- 2012 035 406
- US-A1- 2014 252 171
- US-A1- 2015 000 523
- US-A1- 2016 167 802
- Walter J. Balster ET AL: "Effects of temperature on formation of insolubles in aviation fuels", International Gas Turbine & Aeroengine Congress & Exhibition Orlando, Florida, June 2-5, 1997, 2 June 1997 (1997-06-02), pages 1-6, XP055435764, DOI: 10.1016/j.fuel.2016.01.040 Retrieved from the Internet: URL:http://epo.summon.serialssolutions.com /2.0.0/link/0/eLvHCXMwrV07T8MwELYoEwy8JcpD shAbimoncR5sPBoYmFAZmCw_1VQ0rSgguvPD8TkOAo kJsZ4up9gnn8_2d98hdKpSYwSxeZS7bCFKRVa6JWWK SFpbSpefS-Hpix-v0tFNfn-T3oVamICqDKG_Dek-WA fJIEzmYF7XUOJLM2AOoZlPc30Be0Kge0N1ffkVjPOC tUTMNItAO9TNtBAv-2rg9YFmnrkT7j9-35t64-6W1e 861eZ__O8W [retrieved on 2017-12-15]

## Description

### CROSS-REFERENCE TO RELATED APPLICATIONS

This application claims the benefit of Provisional Application Serial No. 62/414,855, filed October 31, 2016.

### BACKGROUND OF THE INVENTION

This invention generally relates to the aircraft on-board systems, and more particularly, to a fuel stabilization system.

On-board Inert Gas Generating Systems (OBIGGS) are used to introduce an inert gas into the fuel tanks of a vehicle, such as an aircraft. The inert gas displaces potentially dangerous fuel and air mixtures, thereby reducing the risk of explosion or fire. Further, the dissolved oxygen within the fuel may react with fuel and form solids that block the flow of fuel along the fuel passage and that foul heat exchange surfaces. Inert gas can be used to remove dissolved oxygen from fuel. Typically, OBIGGS process air from an air source, such as bleed air taken from the engines of an aircraft. A deoxygenated air is typically generated by separating oxygen from local, ambient air and pumping the deoxygenated air into the ullage of the tank.

Fuel tank systems are disclosed in US 2006/113248 and in US 2016/167802.

### BRIEF DESCRIPTION OF THE INVENTION

According to one aspect, there is provided a system for generating inert gas as defined in claim 1.

According to another aspect, there is provided a method of eliminating dissolved oxygen from fuel to discourage the formation of solid deposits, as defined in claim 7.

Further embodiments are disclosed in the dependent claims.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a plan view of an example of an aircraft;
FIG. 2 is a schematic diagram of a portion of a fuel system of an aircraft;
FIG. 3 is a schematic diagram of an example of a fuel tank and fuel stabilization chamber;
FIG. 4 is a schematic diagram of another example of a fuel tank and fuel stabilization chamber;
FIG. 5 is a schematic diagram of deoxygenation system associated with a fuel stabilization chamber;
FIG. 6 is a schematic diagram of a system for thermally conditioning a fuel;
FIG. 7 is a schematic diagram of a system for stabilizing a fuel in multiple stages; and
FIG. 8 is a schematic diagram of another system for stabilizing a fuel in multiple stages.

### DETAILED DESCRIPTION OF THE INVENTION

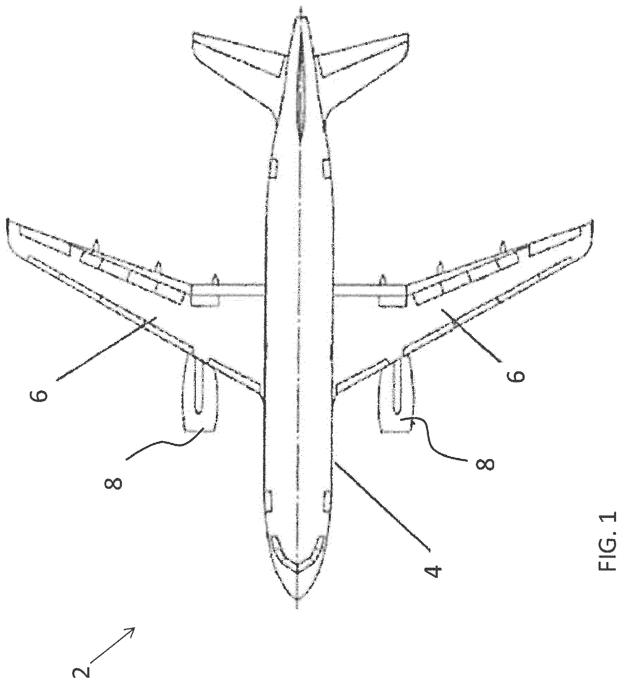

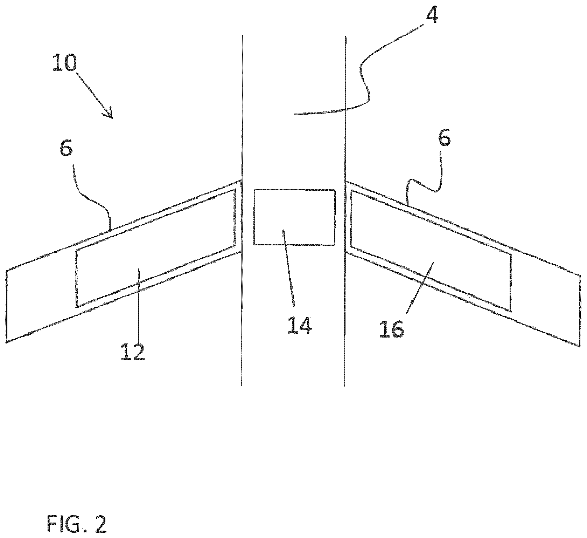

FIG. 1 is a plan view of an aircraft 2, such as a commercial airliner for example. The aircraft 2 includes a fuselage 4, a left and right wing 6, 6, and under-wing mounted engines 8. Arranged within an interior volume of the aircraft 2 is a fuel system having at least one fuel tank for storing aviation fuel. With reference to FIG. 2, the fuel tanks of a fuel system 10 having a three tank configuration are illustrated. As shown, the fuel system 10 includes a left wing tank 12, a right wing tank 16 and a center tank 14. The fuel system 10 additionally includes a ventilation system (not shown) for ventilating the ullage of each of the tanks 12, 14, 16. The fuel system 10 illustrated and described herein is intended as an example only, and other fuel systems having any number of tanks arranged in any configuration are also within the scope of the disclosure.

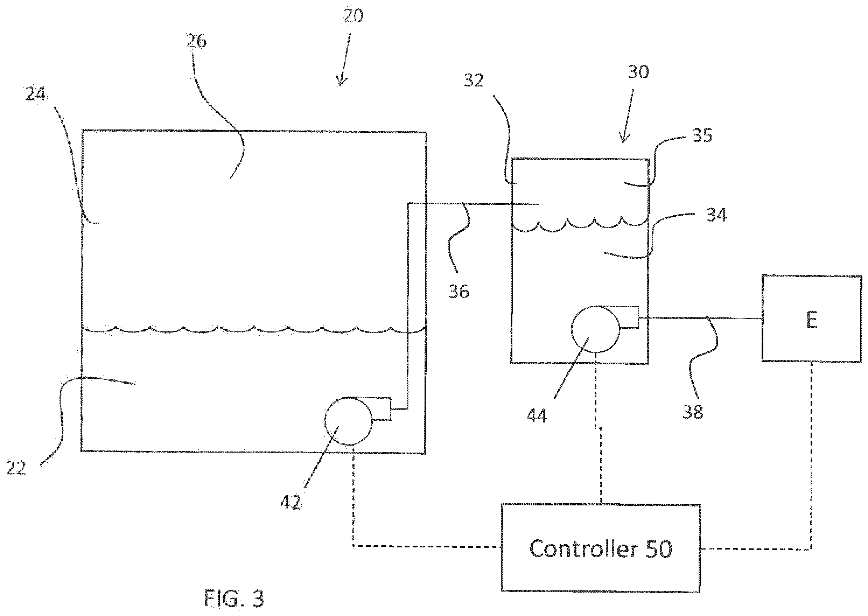

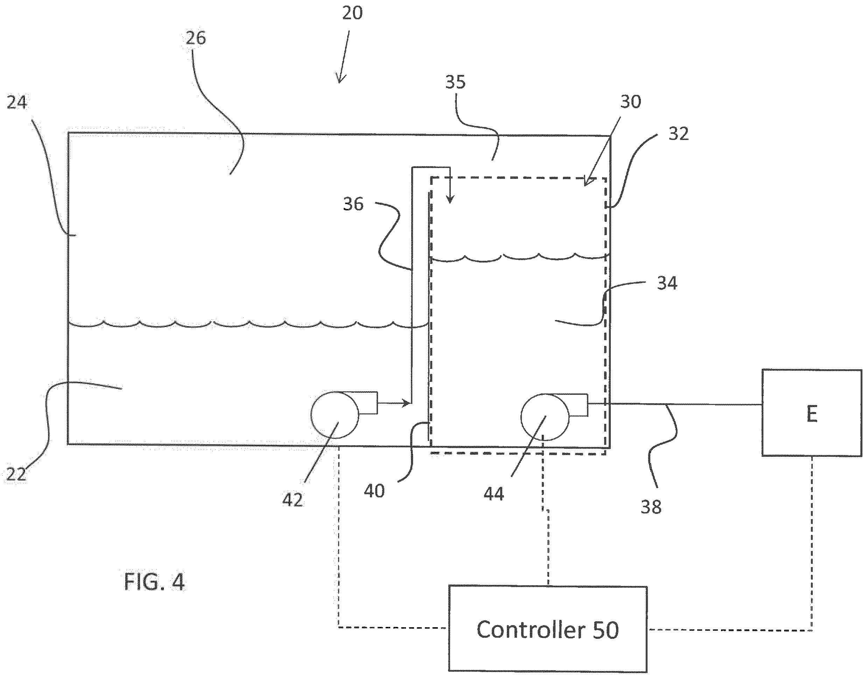

Referring now to FIGS. 3 and 4, an example of a tank 20 for use in a fuel system, such as fuel system 10 is illustrated. However, it should be understood that fuel systems configured for use in other applications, such as motor vehicle and marine applications for example, are also contemplated herein. The tank 20 is configured to store a quantity of fuel 22 therein. Although the tank 20 is generally shown as being rectangular in shape, a tank 20 having any shape is within the scope of the disclosure. The tank 20 defines an inner storage volume or inner cavity 24 within which liquid fuel 22 is received and stored. Gases typically fill the ullage 26 located above the surface of the fuel 22. In some embodiments, the fuel 22 within the tank 20 may have already been stabilized (i.e. by sparging, by membranes, or by other methods) to remove dissolve oxygen therefrom prior to tilling the tank 20 with the fuel 22.

The inner storage volume 24 of the tank 20 is fluidly coupled to a fuel stabilization chamber 30. The fuel stabilization chamber 30 includes an inner volume 32 for storing a limited supply of fuel 34 received from the inner storage volume 24 of tank 20. The inner volume 32 of the fuel stabilization chamber 30 is generally smaller than the inner storage volume 24 of the tank 20; however, embodiments where the inner volume 32 is greater than or equal to the inner storage volume 24 are also contemplated herein. The fuel stabilization chamber 30 may be an enclosed volume in which case a provision or mechanism for the egress of gases is necessary. A gas release mechanism configured to remove gases from chamber 30 is envisioned. In an embodiment, the gas release mechanism is a degassing valve. The gas release mechanism may function in conjunction with a liquid-gas separation mechanism. In an embodiment, the flow path is outfitted with vanes to deflect bubbles towards the gas release mechanism. Vented gases from chamber 30 may be directed into inner storage volume 24 for the purpose of fuel tank-inerting or vented overboard.

For the purposes of this disclosure, it should be understood that the fuel stabilization chamber 30 may include any body containing a volume of fuel. In an embodiment, the volume of fuel is physically isolated from another volume of fuel, such as a collector cell within the inner storage volume 24. Accordingly, in an embodiment, a fuel line, pipe, or tube extending from the fuel tank 20, or even the fuel tank itself may be considered a fuel stabilization chamber 30 within this disclosure.

In an illustrative example best shown in FIG. 3, the fuel stabilization chamber 30 is a separate component from the tank 20 and is fluidly coupled to thereto with at least one fuel line 36 and is fluidly coupled to an engine or thermal management system, illustrated schematically at E, with one or more fuel lines 38. With such configurations, the tank 20 and the fuel stabilization chamber 30 may be located in the same area, or in different areas of a vehicle. For example, in an aircraft, the tank 20 may be located centrally within the fuselage 4, and the fuel stabilization chamber 30 may be positioned closer to an engine E, such as within a wing 6 of the aircraft 2. In an embodiment, illustrated in FIG. 4, the fuel stabilization chamber 30 is a compartment formed within the tank 20. In such embodiments, a dividing wall 40, such as a baffle for example, separates the fuel 22 within the inner storage volume 24 of the tank 20 from the fuel 34 within the inner volume 32 of the fuel stabilization chamber 30.

Fuel is supplied to an engine or thermal management system E from the inner volume 32 of the fuel stabilization chamber 30. A first pump 42, commonly referred to as a scavenge pump, is operable to move fuel from the inner storage volume 24 to the inner volume 32 of the fuel stabilization chamber 30 via one or more fuel lines 36. A second pump 44, sometimes referred to as a boost pump, is operable to provide fuel 34 from the inner volume 32 of the fuel stabilization chamber 30 to the engine E via at least one fuel line 38. In an embodiment, operation of the first pump 42 is dependent on operation of the second pump 44. For example, the first pump 42 may be powered by the high pressure flow generated during operation of the second pump 44.

One or more of the first pump 42, the second pump 44, and a portion of the engine E are operably coupled to a controller 50. In an embodiment, the controller 50 is configured to control operation of both the first pump 42 and the second pump 44 to maintain at least a minimum amount of fuel 34 in the inner volume 32 of the fuel stabilization chamber 30 at all times. The controller 50 may additionally operate the second pump 44 in response to the fuel demand of the engine E and operate the first pump 42 to provide a desired amount of fuel 22 to the fuel stabilization chamber 30. Alternatively, the first pump 42 may be configured to continuously pump fuel 22 from the inner storage volume 24 into the inner volume 32 of the fuel stabilization chamber 30.

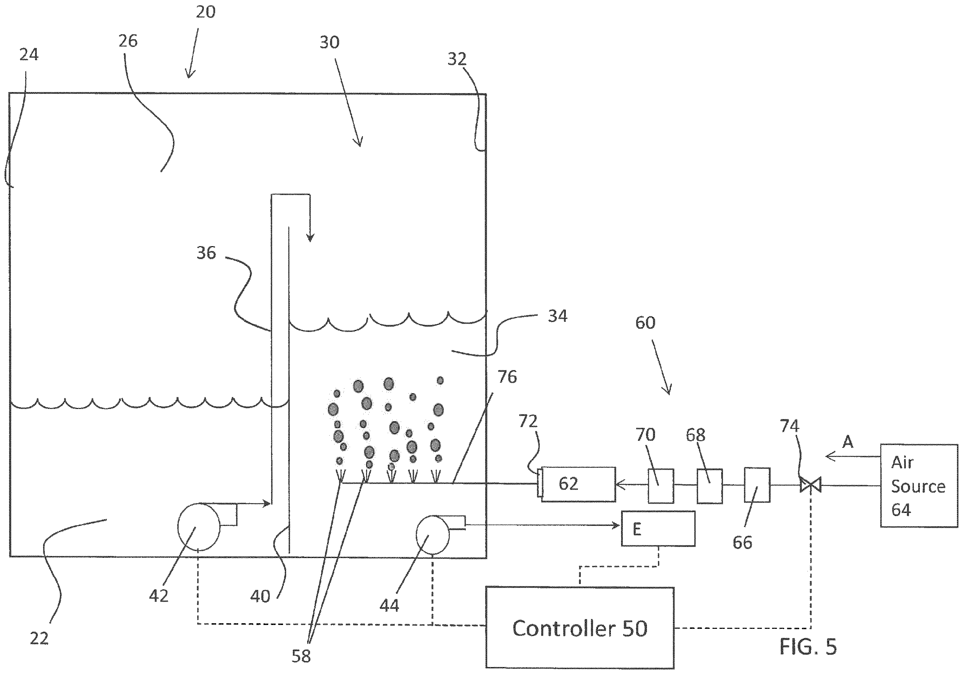

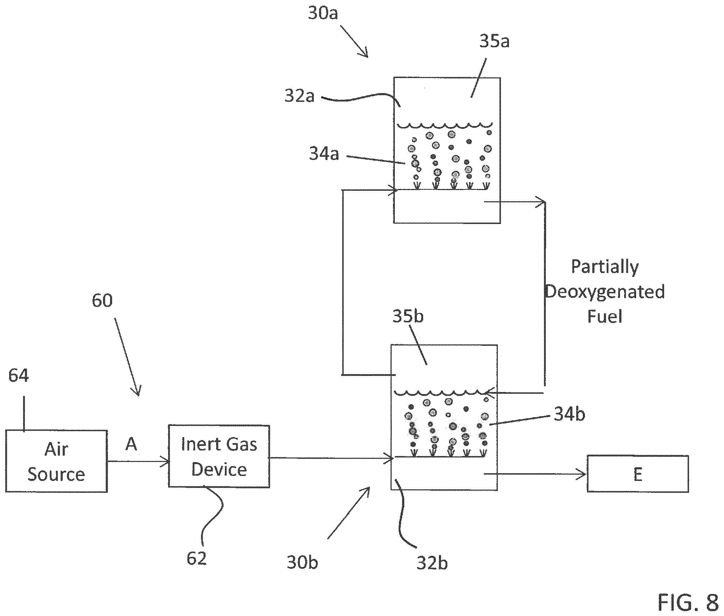

Referring now to FIGS. 5-8, a system 60 for stabilizing fuel, by removing dissolved oxygen therefrom, may be associated with a portion of fuel system. Stabilizing the entirety of the inner storage volume 24 of the fuel tank 20 is impractical for fuel 22 that has not been partially or fully stabilized prior to introduction into fuel tank 20. This impracticality is due to the size of the equipment needed and the attendant fuel requirement for operation and transport of said equipment. In an embodiment, the system 60 is operably coupled to and is configured to remove dissolved oxygen from only a limited portion of fuel, such as the fuel 34 within the fuel stabilization chamber 30. The system 60 for stabilizing fuel includes at least one inert gas device 62. In an embodiment, the inert gas device 62 includes one or more pressure swing adsorption (PSA) devices. In an embodiment, the inert gas device 62 includes one or more air separation modules (ASM), each having at least one permeable membrane. Alternatively or in addition, the inert gas device 62 may include an electrochemical device or a stored supply of inert gas. An example of a suitable electrochemical device includes at least one proton exchange membrane device as described in U.S. Patent Application Serial No. 15/151,132, filed on May 10, 2016. Similarly, the inert gas device 62 may include a combination of devices, such as an air separation module and an electrochemical device, as described in U.S. Patent Application Serial No. 15/169,165, filed on May 31, 2016.

The size and inert gas generating capacity of the inert gas device may vary depending on the demands of an application. For example, in some embodiments the inert gas device 62 may be sized to handle fuel entering the fuel stabilization chamber 30 that is fully saturated in oxygen. Alternatively, the inert gas device 62 may be sized for use with a fuel that contains only a small concentration of dissolved oxygen, such as fuel in a "pre-stabilized" condition. In yet another embodiment, the inert gas device 62 may be sized based on a specific phase or flight condition during operation of the aircraft. For example, the inert gas device 62 may be sized for a climb phase in which gases including oxygen evolve from fuel stored in vented fuel tanks due to low ambient pressure. Alternatively, the inert gas device 62 may be sized for a descent phase in which outside air enters the ullage due to unequal pressure.

In embodiments where the inert gas device 62 includes a PSA device, an ASM, or an electrochemical device, the inert gas device 62 is configured to receive pressurized air A supplied from a pressurized air source 64. The pressurized air source 64 may include one or more engines, such as of an aircraft for example. In such embodiments, the pressurized air A may be bled from a compressor section of the engine E. However, embodiments where the pressurized air source 64 is not an engine are also contemplated herein. For example, the pressurized air source 64 may include a compressor (not shown) configured to pressurize ambient air as it passes there through. The compressor may be driven by a mechanical, pneumatic, hydraulic, or electrical input.

In an embodiment, the inert gas device 62 is configured to separate the pressurized air A into an oxygen-enriched permeate and an inert gas-enriched (oxygen-depleted) air, also referred to as retentate. Oxygen-enriched and water-enriched air permeate is released from the inert gas device 62 to the ambient atmosphere, and the dry, inert gas-enriched air is directed to a fuel stabilization chamber 30.

The system for stabilizing fuel 60 may additionally include one or more components commonly found in existing fuel inerting systems. For example, the pressurized air A may be configured to flow through one or more filters 66, such as a coalescing filter to separate liquid water from oil, and a particulate filter to remove particulate contaminants, and a carbon filter for removing hydrocarbons from the supply of pressurized air A before being provided to the inert gas device 62. Alternatively, or in addition, the system 60 may include an ozone conversion means 68 for reducing the ozone concentration of the pressurized air A. It should be understood that both the filter 66 and ozone conversion means 68 may be located at any relative position within the system 60, upstream from the inert gas device 62.

Further, because the pressurized air A from the pressurized air source 64 is generally hot, in an embodiment, the system 60 includes at least one cooling device 70 for cooling either temperature of the pressurized air A before it is provided to the inert gas device 62 and/or the fuel stabilization chamber. An example of a cooling device 70 includes a heat exchanger configured to arrange the pressurized air in a heat transfer relationship with a secondary cooling flow, such as fan bypass air from the pressurized air source 64 or ram air for example. In the illustrated, non-limiting embodiment, the cooling device 70 is arranged downstream of filter 66 and ozone conversion means 68; however, configurations in which cooling device 70 is located upstream of filter 66 and ozone conversion means 68 are also contemplated herein. Similarly, configurations where the cooling device 70 is located downstream of the inert gas device 62 are also contemplated herein.

In an embodiment, a backpressure regulator 72 is associated with the inert gas device 62 to ensure that a pressure necessary for operation of the inert gas device 62 is continuously maintained therein. Alternatively or in addition, a flow control device 74, such as a valve for example, configured to control the flow of pressurized air A through the system 60 may be disposed at any location along the fluid flow path between the source 64 of the pressurized air A and a final destination of the inert gas. In embodiments where the source 64 includes a compressor, the flow control device 74 may include a variable speed motor associated with the compressor. Although the flow control device 74 is illustrated as being disposed upstream of the inert gas device 62 in each of the embodiments, systems 20 where the flow control device 72 is arranged downstream from the inert gas device 62 are also contemplated herein. The controller 50 may be operably coupled to the flow control device to control the flow of pressurized air A to the inert gas device 62, and therefore the output of inert gas form the inert gas generating device in response to a demand of the engine E.

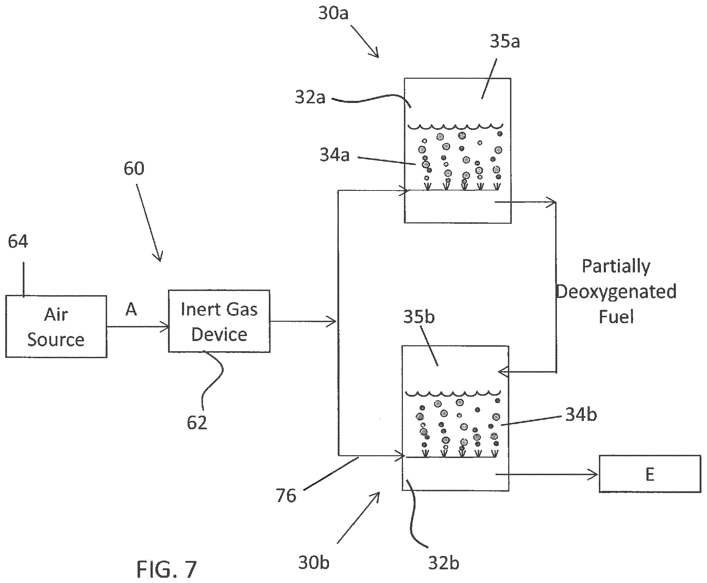

The inert gas or the inert gas-enriched air output from the inert gas device 62, both of which are incorporated in the term "inert gas" used hereinafter, is used to stabilize the fuel 34 within the fuel stabilization chamber 30 by removing dissolved oxygen therefrom. Although the system 60 is illustrated with respect to a single fuel stabilization chamber 30 in FIG. 5, embodiments of the system 60 where the inert gas from an inert gas device 62 is provided to more than one fuel stabilization chamber 30, as shown in FIG. 7, are also within the scope of the disclosure.

In such embodiments, the inert gas output from the inert gas device 62 has an oxygen content of less than about 18% by volume, and more specifically less than about 12%, less than about 10%, less than about 5%, and less than about 2% by volume. By using nearly pure gas in lieu of gas-enriched air, the total volume of gas necessary for inerting purposes is reduced. The inert gas described herein is generally referred to as nitrogen; however, it should be understood that the inert gas may contain other species in lower concentrations including non-inert species such as oxygen. In an embodiment, the inert gas should maintain this level of less than 2% oxygen by volume during all operating conditions of the vehicle, particularly during the period of operation having the highest inert gas demand. Alternatively or in addition, the ullage 35 of the fuel stabilization chamber 30 may be preloaded with highly oxygen-depleted inert gas prior to or during the period of operation having the highest inert gas demand to prevent the oxygen concentration from to exceeding a desired threshold.

Stabilization of the fuel 34 within the fuel stabilization chamber 30 is performed via a sparging operation. However, other methods of stabilizing the fuel by interacting the liquid fuel 34 with an inert gas are also known. To sparge the fuel stabilization chamber 30, a conduit 76 extends from the inert gas device 62 or another upstream component, into the interior volume 32 of the fuel stabilization chamber 30. In some embodiments, maneuvers of the aircraft may cause conduit 76 not to be immersed in which case a plurality of conduits 76 may be co-located within the interior 32 of the fuel stabilization chamber 30 in various orientations and spatial locations with provisions to switch flow of inert gas there between. In an embodiment, conduit 76 may have a tortuous shape that will ensure that a portion of inert gas is submerged in fuel at all time. The conduit 76 includes ports, nozzles, pores, or orifices 78 of a suitable size for injecting the inert gas into the fuel 34, thereby creating a bubbling effect, as illustrated. The bubbles of inert gas will rise toward the ullage 35, with a portion of the inert gas being dissolved into the fuel 34.

By supplying the inert gas to the fuel 34, the content of dissolved inert gas in the fuel 34 is increased and the content of dissolved oxygen is decreased according to Henry's Law. Therefore, the injection of the inert gas bubbles into the fuel 34 exposes the liquid fuel to a higher partial pressure of inert gas, such as nitrogen, and a considerably lower partial pressure of oxygen resulting in oxygen leaving the fuel 34. The fuel stabilization chamber 30 may be outfitted with baffles, turbulators, etc., to increase the residence time (contact time) between the inert gas and the fuel for improved oxygen removal. In addition, the ports, nozzles, pores, or orifices 78 associated with conduit 76 may be oriented such as to increase the residence time of inert gas within the inner volume 32. The system 20 is therefore effectively used to remove the dissolved oxygen in the fuel 34 within the fuel stabilization chamber 30 and to introduce inert gas.

Conventional inert gas generation systems thermally regulate the inert gas temperature to 80°C or less due to structural limits of fuel tank materials. The temperature of the inert gas provided to the fuel stabilization chamber 30 may be lower than the 80°C typically required in a normal fuel tank inerting system. A reduced temperature may be desirable to avoid vaporizing the volatile fractions of the fuel 34 within the fuel stabilization chamber 30. In an embodiment, the temperature of the inert gas provided to the fuel stabilization chamber 30 is less than the boiling point of the lightest volatile fraction commonly found in the fuel to avoid fractioning the fuel and changing the fuel composition. However, volatile fractions that would typically boil off during a standard day should be excluded when determining the maximum allowable temperature of the inert gas. In an embodiment, the inert gas is provided to the fuel stabilization chamber 30 at a temperature of less than or equal to about 25°C at sea level. However, it should be understood that the boiling point of the lightest volatile fraction, and therefore the maximum allowable temperature of the inert gas may vary with the altitude of the aircraft.

In an embodiment, the temperature of the inert gas may be thermally regulated, such as via a heat exchanger for example. An example of the implementation of such a heat exchanger is described in U.S. Patent Application Serial No. 15,639,587, filed on June 30, 3017, U.S. Patent Application Serial No. 14/969,398 filed on December 15, 2015, and U.S. Patent Application Serial No. 15/348,287 filed on November 10, 2016. Alternatively, the temperature of the inert gas provided to the fuel stabilization chamber 30 may be greater than the boiling point of the lightest volatile fraction commonly found in the fuel 34. In such embodiments, the fuel fractions that boil off locally may be recovered when they condense in the bulk fuel. Alternatively, escaped hydrocarbon fractions can be recovered by passing the ullage gases that contain fuel vapors through a reverse selective membrane as disclosed, for example, in U.S. Patent Application Serial No. 15/192,692, filed on June 24, 2016.

The temperature of the inert gas can be managed by bypassing cooling device 70 entirely or in part (not shown). For example, at altitude when fuel is exposed to cold temperatures over a protracted duration (a condition commonly referred to as "cold soak"), the temperature of the inert gas can be increased, such as beyond the boiling point of the lightest fractions for example, in order to transfer heat from the inert gases to the fuel 34. This action may help avoid problems associated with ice formation and with wax crystal formation in cold fuel. However, care must be taken to avoid excessively heating the fuel, which can lead to the evaporation and boiling of fuel species (fractional distillation). In an embodiment, the heat sink flow provided to a cooling device 70 is restricted or entirely blocked in order to regulate the temperature of inert gas.

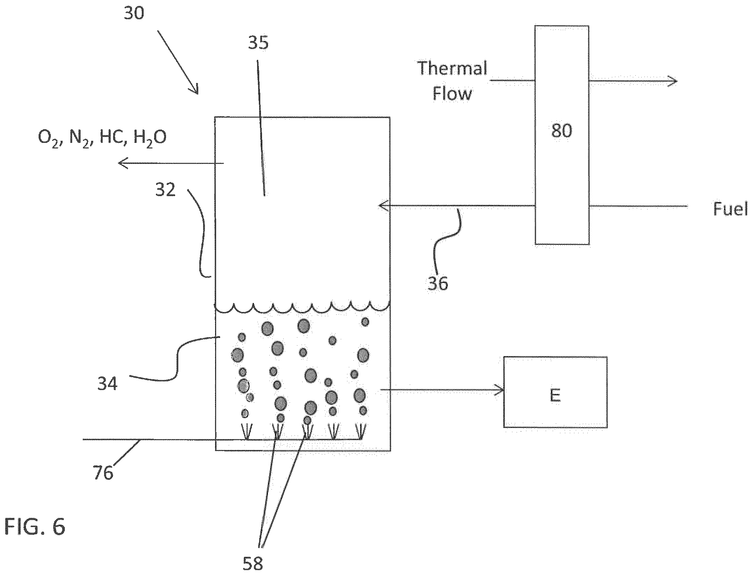

In addition, it may be desirable to thermally condition or regulate the fuel that enters the inner volume 32 of fuel stabilization chamber 30. As shown in the non-limiting embodiment of FIG. 6, the fuel within the fuel line 36 is arranged in a heat transfer relationship with another fluid flow within a heat exchanger 80 arranged before being released into the inner volume 32. The temperature of the fuel may be regulated to influence the deoxygenation process. Warmer fuel has improved kinetics for mass transport compared to a colder fuel which holds less dissolved oxygen. Several heat sources and heat sinks are available on the aircraft for regulating the temperature of the fuel before being interacting with an inert gas. Examples of such heat sources and sinks include, but are not limited to, engine oil, heated fuel, compressed air, ram air (when sufficiently cold), portions of the ECS, or dedicated equipment such as an air cycle machine for example.

In addition, it may be desirable to thermally condition or regulate the fuel output from the inner volume 32. System 60 may employ a heat exchanger to establish a heat transfer relationship with another fluid located between fuel stabilization chamber 30 and engine E. In an embodiment, the system 60 may include a recuperating heat exchanger configured to adjust the temperature of the fuel 24 entering the fuel stabilization chamber 30 to a temperature of the fuel 34 output from the fuel stabilization chamber 30 to save energy. In addition, the fuel stabilization chamber or the fuel line 36 may be provisioned with heating elements, resistance coils, burners, catalytic oxidation units, thermoelectric coolers, etc, in order to regulate the temperature of the fuel 34.

Further, in some embodiments, it may be desirable to stabilize a fuel by removing the dissolved oxygen therefrom in multiple stages. With reference to FIG. 7, the system 60 for stabilizing a fuel 34 is operably coupled to both a first fuel stabilization chamber 30a and a second fuel stabilization chamber 30b. As shown, the inert gas from the inert gas device 62 is provided to the inner volume 32 of both fuel stabilization chamber 30a, 30b simultaneously. Further, the first fuel stabilization chamber 30a and the second fuel stabilization chamber 30b are arranged in series. As a result, at least a portion of the dissolved oxygen within the fuel 34a of the first fuel stabilization chamber 30a is removed before being provided to the interior volume 32b of the fuel stabilization chamber 30b. The additional fuel stabilization that occurs within the second fuel stabilization chamber 30b via the interaction between the inert gas and the liquid fuel 34b therein results in the removal of additional dissolved oxygen from the fuel 34b. Fuel 34b is then provided in response to a demand by an engine or thermal management system E operably coupled thereto. In an alternative embodiment, the passivating gases within the ullage 35b of the second fuel stabilization chamber 30b may be used as the inert gas for removing the oxygen from the fuel 34a within the inner volume 32a of the first fuel stabilization chamber 30a by transporting with a prime mover such as a blower fan, etc. (not shown).

Inclusion of an inert gas device 62 on board an aircraft 2, enables fuel stabilization, thereby allowing fuel 34 within a fuel stabilization chamber 30 associated with a fuel tank 20 to absorb more heat than currently possible without deposit formation. Further, because the inert gas passivates the ullage of the fuel stabilization chamber 30, a separate fuel tank inerting system is not necessary. In addition, the system 60 not only removes water from the fuel, but also addresses known problems of bacterial growth, freezing, and fuel degradation of conventional systems. Although the system 60 is illustrated and described herein with respect to an aircraft, it should be understood that such a system may be adapted for use in a variety of applications including motor vehicle and marine applications for example.

While the invention has been described in detail in connection with only a limited number of embodiments, it should be readily understood that the invention is not limited to such disclosed embodiments. Rather, the invention can be modified to incorporate any number of variations, alterations or substitutions not heretofore described, but which are commensurate with the scope of the invention as defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A system for generating inert gas comprising:
a fuel tank (20) including an inner storage volume (24) containing a fuel;
a fuel stabilization chamber (30) having an inner volume (32) containing fuel and an ullage, said fuel within said inner volume being separate from said fuel within said inner storage volume, wherein said fuel stabilization chamber and said fuel tank are coupled such that said fuel is movable from said inner storage volume to said inner volume;
an inert gas device (62) operably coupled to the inner volume of said fuel stabilization chamber, wherein inert gas output from said inert gas device interacts with a fuel in said inner volume to remove dissolved oxygen from said fuel in said inner volume; the system further comprising:
a first pump (42) for moving said fuel from said inner storage volume to said inner volume;
a second pump (44) for providing said fuel from said inner volume to a downstream component; and
a conduit (76) extending from said inert gas device (62) into said inner volume, said conduit being operable to expel said inert gas therefrom as a plurality of bubbles;
and the system being **characterised in that** said fuel stabilization chamber is integrally formed with said fuel tank, and said fuel in said inner storage volume and said fuel in said inner volume are separated by a dividing wall.

2. The system of claim 1, further comprising a component fluidly coupled to said inner volume, wherein said inert gas device (62) provides said inert gas to said fuel in said inner volume in response to a demand of said component.

3. The system of any preceding claim, wherein said inert gas device (62) converts pressurized air into an oxygen enriched air flow and an inert gas enriched air flow, said inert gas enriched air flow being provided to said inner volume as said inert gas.

4. The system of any preceding claim, wherein said inert gas device includes a stored supply of inert gas.

5. The system of any preceding claim, wherein said interaction of said inert gas with said fuel in said inner volume performs a fuel tank inerting operation.

6. The system of any preceding claim, wherein said inert gas device is configured such that said inert gas is provided to said fuel at a temperature of less than or equal to 80°C at sea level.

7. A method of eliminating dissolved oxygen from fuel to discourage the formation of solid deposits using the system of claim 1, comprising:
providing a portion of fuel from an inner storage volume of a fuel tank to an inner volume of a fuel stabilization chamber having an ullage, wherein said fuel within said inner volume is separate from said fuel within said inner storage volume and wherein said fuel stabilization chamber and said fuel tank are coupled such that said fuel is movable from said inner storage volume to said inner volume, wherein the fuel stabilization chamber is integrally formed with said fuel tank, and said fuel in said inner storage volume and said fuel in said inner volume are separated by a dividing wall;
providing a supply of inert gas from an inert gas device (62) operably coupled to the inner volume of said fuel stabilization chamber to said inner volume of said fuel stabilization chamber;
interacting said inert gas and said portion of fuel in said inner volume to remove dissolved oxygen from said fuel in said inner volume; wherein
a first pump (42) is used for moving said fuel from said inner storage volume to said inner volume; and
a second pump (44) is used for providing said fuel from said inner volume to a downstream component; and
a conduit (76) extends from said inert gas device (62) into said inner volume, wherein said conduit expels said inert gas therefrom as a plurality of bubbles.

8. The method according to claim 7, further comprising supplying said fuel in said inner volume to a component in response to a demand by said component after said interaction.

9. The method according to claim 7, wherein said inert gas-enriched air is supplied to said fuel at a temperature less than or equal to 80°C at sea level.

10. The method according to claim 7, further comprising:
providing pressurized air to said inert gas device; and
separating said pressurized air into an oxygen-enriched air and an inert-gas enriched air, said inert-gas enriched air being provided to said inner volume as said supply of inert gas.

11. The method according to claim 7, wherein said portion of fuel is provided from said inner storage volume to said an inner volume in response to a demand from a component operably coupled to said fuel stabilization chamber.

## Patentansprüche

1. System zum Erzeugen von Inertgas, umfassend:
einen Kraftstofftank (20), der ein inneres Speichervolumen (24) beinhaltet, das einen Kraftstoff enthält;
eine Kraftstoffstabilisierungskammer (30), die ein Innenvolumen (32) aufweist, das einen Kraftstoff und einen Leerraum aufweist, wobei der Kraftstoff in dem Innenvolumen von dem Kraftstoff in dem inneren Speichervolumen getrennt ist, wobei die Kraftstoffstabilisierungskammer und der Kraftstofftank derart gekoppelt sind, dass der Kraftstoff aus dem inneren Speichervolumen in das Innenvolumen bewegt werden kann;
eine Inertgasvorrichtung (62), die mit dem Innenvolumen der Kraftstoffstabilisierungskammer wirkverbunden ist, wobei eine Inertgasausgabe von der Inertgasvorrichtung mit einem Kraftstoff in dem Innenvolumen interagiert, um gelösten Sauerstoff aus dem Kraftstoff in dem Innenvolumen zu entfernen;
wobei das System ferner Folgendes umfasst:
eine erste Pumpe (42) zum Bewegen des Kraftstoffs aus dem inneren Speichervolumen in das Innenvolumen;
eine zweite Pumpe (44) zum Bereitstellen des Kraftstoffs aus dem Innenvolumen an einer stromabwärtigen Komponente; und
eine Leitung (76), die sich von der Inertgasvorrichtung (62) in das Innenvolumen erstreckt, wobei die Leitung betätigt werden kann, um das Inertgas davon als eine Vielzahl von Bläschen abzugeben;
und wobei das System **dadurch gekennzeichnet ist, dass** die Kraftstoffstabilisierungskammer einstückig mit dem Kraftstofftank gebildet ist und der Kraftstoff in dem inneren Speichervolumen und der Kraftstoff in dem Innenvolumen durch eine Zwischenwand getrennt sind.

2. System nach Anspruch 1, ferner umfassend eine Komponente, die fluidisch an das Innenvolumen gekoppelt ist, wobei die Inertgasvorrichtung (62) das Inertgas als Reaktion auf einen Bedarf der Komponente an dem Kraftstoff in dem Innenvolumen bereitstellt.

3. System nach einem der vorangehenden Ansprüche, wobei die Inertgasvorrichtung (62) Druckluft in einen sauerstoffangereicherten Luftstrom und einen inertgasangereicherten Luftstrom umwandelt, wobei der inertgasangereicherte Luftstrom an dem Innenvolumen als das Inertgas bereitgestellt wird.

4. System nach einem der vorangehenden Ansprüche, wobei die Inertgasvorrichtung einen gespeicherten Vorrat an Inertgas beinhaltet.

5. System nach einem der vorangehenden Ansprüche, wobei durch die Interaktion des Inertgases mit dem Kraftstoff in dem Innenvolumen ein Inertisierungsvorgang im Kraftstofftank durchgeführt wird.

6. System nach einem der vorangehenden Ansprüche, wobei die Inertgasvorrichtung derart konfiguriert ist, dass das Inertgas mit einer Temperatur von kleiner oder gleich 80 °C auf Meereshöhe an dem Kraftstoff bereitgestellt wird.

7. Verfahren zum Entfernen von gelöstem Sauerstoff aus einem Kraftstoff, um die Bildung von festen Ablagerungen zu vermeiden, unter Verwendung des Systems nach Anspruch 1, umfassend:
Bereitstellen eines Teils eines Kraftstoffs aus einem inneren Speichervolumen eines Kraftstofftanks an einem Innenvolumen einer Kraftstoffstabilisierungskammer, die einen Leerraum aufweist, wobei der Kraftstoff in dem Innenvolumen von dem Kraftstoff in dem inneren Speichervolumen getrennt ist und wobei die Kraftstoffstabilisierungskammer und der Kraftstofftank derart gekoppelt sind, dass der Kraftstoff aus dem inneren Speichervolumen in das Innenvolumen bewegt werden kann, wobei die Kraftstoffstabilisierungskammer einstückig mit dem Kraftstofftank gebildet ist und der Kraftstoff in dem inneren Speichervolumen und der Kraftstoff in dem Innenvolumen durch eine Zwischenwand getrennt sind;
Bereitstellen eines Vorrats an Inertgas aus einer Inertgasvorrichtung (62), die mit dem Innenvolumen der Kraftstoffstabilisierungskammer wirkverbunden ist, an dem Innenvolumen der Kraftstoffstabilisierungskammer,
Interagierenlassen des Inertgases mit dem Teil des Kraftstoffs in dem Innenvolumen, um gelösten Sauerstoff aus dem Innenvolumen zu entfernen, wobei
eine erste Pumpe (42) zum Bewegen des Kraftstoffes aus dem inneren Speichervolumen in das Innenvolumen verwendet wird; und
eine zweite Pumpe (44) zum Bereitstellen des Kraftstoffs aus dem Innenvolumen an einer stromabwärtigen Komponente verwendet wird; und
sich eine Leitung (76) von der Inertgasvorrichtung (62) in das Innenvolumen erstreckt, wobei die Leitung das Inertgas davon als eine Vielzahl von Bläschen abgibt.

8. Verfahren nach Anspruch 7, ferner umfassend Zuführen des Kraftstoffs in dem Innenvolumen zu einer Komponente als Reaktion auf einen Bedarf der Komponente nach der Interaktion.

9. Verfahren nach Anspruch 7, wobei die inertgasangereicherte Luft mit einer Temperatur von kleiner oder gleich 80 °C auf Meereshöhe an dem Kraftstoff bereitgestellt wird.

10. Verfahren nach Anspruch 7, ferner umfassend:
Bereitstellen von Druckluft an der Inertgasvorrichtung; und
Trennen der Druckluft in eine sauerstoffangereicherte Luft und eine inertgasangereicherte Luft, wobei die inertgasangereicherte Luft an dem Innenvolumen als der Vorrat an Inertgas bereitgestellt wird.

11. Verfahren nach Anspruch 7, wobei der Teil des Kraftstoffs als Reaktion auf einen Bedarf von einer Komponente, die mit der Kraftstoffstabilisierungskammer wirkverbunden ist, aus dem inneren Speichervolumen an dem Innenvolumen bereitgestellt wird.

## Revendications

1. Système pour générer un gaz inerte comprenant :
un réservoir de carburant (20) comportant un volume de stockage interne (24) contenant un carburant ;
une chambre de stabilisation de carburant (30) ayant un volume interne (32) contenant du carburant et un creux, ledit carburant à l'intérieur dudit volume interne étant séparé dudit carburant à l'intérieur dudit volume de stockage interne, dans lequel ladite chambre de stabilisation de carburant et ledit réservoir de carburant sont couplés de sorte que ledit carburant peut être déplacé dudit volume de stockage interne audit volume interne ;
un dispositif à gaz inerte (62) couplé de manière opérationnelle au volume interne de ladite chambre de stabilisation de carburant, dans lequel le gaz inerte sortant dudit dispositif à gaz inerte interagit avec un carburant dans ledit volume interne pour éliminer l'oxygène dissous dudit carburant dans ledit volume interne ;
le système comprenant en outre :
une première pompe (42) pour déplacer ledit carburant dudit volume de stockage interne audit volume interne ;
une seconde pompe (44) pour fournir ledit carburant dudit volume interne à un composant en aval ; et
un conduit (76) s'étendant depuis ledit dispositif à gaz inerte (62) dans ledit volume interne, ledit conduit pouvant être utilisé pour en expulser ledit gaz inerte sous forme d'une pluralité de bulles ;
et le système étant **caractérisé en ce que** ladite chambre de stabilisation de carburant est formée d'un seul tenant avec ledit réservoir de carburant, et ledit carburant dans ledit volume de stockage interne et ledit carburant dans ledit volume interne sont séparés par une paroi de séparation.

2. Système selon la revendication 1, comprenant en outre un composant couplé de manière fluidique audit volume interne, dans lequel ledit dispositif à gaz inerte (62) fournit ledit gaz inerte audit carburant dans ledit volume interne en réponse à une demande dudit composant.

3. Système selon une quelconque revendication précédente, dans lequel ledit dispositif à gaz inerte (62) convertit l'air sous pression en un flux d'air enrichi en oxygène et en un flux d'air enrichi en gaz inerte, ledit flux d'air enrichi en gaz inerte étant fourni audit volume interne sous forme dudit gaz inerte.

4. Système selon une quelconque revendication précédente, dans lequel ledit dispositif à gaz inerte comporte une réserve stockée de gaz inerte.

5. Système selon une quelconque revendication précédente, dans lequel ladite interaction dudit gaz inerte avec ledit carburant dans ledit volume interne effectue une opération d'inertage de réservoir de carburant.

6. Système selon une quelconque revendication précédente, dans lequel ledit dispositif à gaz inerte est configuré de sorte que ledit gaz inerte est fourni audit carburant à une température inférieure ou égale à 80 °C au niveau de la mer.

7. Procédé d'élimination de l'oxygène dissous du carburant pour empêcher la formation de dépôts solides en utilisant le système selon la revendication 1, comprenant :
la fourniture d'une partie de carburant d'un volume de stockage interne d'un réservoir de carburant à un volume interne d'une chambre de stabilisation de carburant ayant un creux, dans lequel ledit carburant à l'intérieur dudit volume interne est séparé dudit carburant à l'intérieur dudit volume de stockage interne et dans lequel ladite chambre de stabilisation de carburant et ledit réservoir de carburant sont couplés de sorte que ledit carburant peut être déplacé dudit volume de stockage interne audit volume interne, dans lequel la chambre de stabilisation de carburant est formée d'un seul tenant avec ledit réservoir de carburant, et ledit carburant dans ledit volume de stockage interne et ledit carburant dans ledit volume interne sont séparés par une paroi de séparation ;
la fourniture d'une alimentation en gaz inerte d'un dispositif à gaz inerte (62) couplé de manière opérationnelle au volume interne de ladite chambre de stabilisation de carburant audit volume interne de ladite chambre de stabilisation de carburant ;
l'interaction dudit gaz inerte et de ladite partie de carburant dans ledit volume interne pour éliminer l'oxygène dissous dudit carburant dans ledit volume interne ; dans lequel une première pompe (42) est utilisée pour déplacer ledit carburant dudit volume de stockage interne audit volume interne ; et
une seconde pompe (44) est utilisée pour fournir ledit carburant dudit volume interne à un composant en aval ; et
un conduit (76) s'étend depuis ledit dispositif à gaz inerte (62) dans ledit volume interne, dans lequel ledit conduit en expulse ledit gaz inerte sous forme d'une pluralité de bulles.

8. Procédé selon la revendication 7, comprenant en outre l'alimentation dudit carburant dans ledit volume interne à un composant en réponse à une demande dudit composant après ladite interaction.

9. Procédé selon la revendication 7, dans lequel ledit air enrichi en gaz inerte est alimenté audit carburant à une température inférieure ou égale à 80 °C au niveau de la mer.

10. Procédé selon la revendication 7, comprenant en outre :
la fourniture d'air sous pression audit dispositif à gaz inerte ; et
la séparation dudit air sous pression en un air enrichi en oxygène et en un air enrichi en gaz inerte, ledit air enrichi en gaz inerte étant fourni audit volume interne comme ladite alimentation en gaz inerte.

11. Procédé selon la revendication 7, dans lequel ladite partie de carburant est fournie dudit volume de stockage interne audit volume interne en réponse à une demande d'un composant couplé de manière opérationnelle à ladite chambre de stabilisation de carburant.
